(19) Europäisches Patentamt
European Patent Office
Office européen des brevets

(11) EP 0 599 067 B1

(12) EUROPÄISCHE PATENTSCHRIFT

(45) Veröffentlichungstag und Bekanntmachung des Hinweises auf die Patenterteilung:
**03.04.1996 Patentblatt 1996/14**

(51) Int Cl.6: **C08L 33/12**, C08L 25/12, C08L 51/04

(21) Anmeldenummer: **93117312.4**

(22) Anmeldetag: **26.10.1993**

# (54) Transparente Formmasse

Transparent moulding matter

Matière à mouler transparente

(84) Benannte Vertragsstaaten:
**AT BE CH DE ES FR GB IT LI NL**

(30) Priorität: **24.11.1992 DE 4239436**

(43) Veröffentlichungstag der Anmeldung:
**01.06.1994 Patentblatt 1994/22**

(73) Patentinhaber: **BASF Aktiengesellschaft**
**D-67063 Ludwigshafen (DE)**

(72) Erfinder:
- **Tiefensee, Kristin, Dr.**
  **D-67368 Westheim (DE)**
- **Guentherberg, Norbert, Dr.**
  **D-67346 Speyer (DE)**
- **Deckers, Andreas, Dr.**
  **D-67063 Ludwigshafen (DE)**

(56) Entgegenhaltungen:
**DE-A- 2 039 022**

- **DATABASE WPI Week 9013, Derwent Publications Ltd., London, GB; AN 90-094618 & JP-A-2 045 547 (MITSUBISHI RAYON) 15. Februar 1990**
- **DATABASE WPI Week 9013, Derwent Publications Ltd., London, GB; AN 90-094618 & JP-A-2 045 547**

Bemerkungen:
Die Akte enthält technische Angaben, die nach dem Eingang der Anmeldung eingereicht wurden und die nicht in dieser Patentschrift enthalten sind.

EP 0 599 067 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Transparente Mischungen (Blends) aus PMMA, SAN und einem Pfropfkautschuk sind bekannt. So beschreibt beispielsweise die EP-A 62 223 derartige Blends, die sich durch eine gute Schlagzähigkeit bei gleichzeitiger Transparenz auszeichnen. Nachteilig bei diesen Formmassen ist allerdings eine oft unzureichende Kerbschlagzähigkeit.

Der Zusatz von Silikonöl (Polysiloxan) zu thermoplastischen Formmassen als Fließverbesserer oder Formtrennmittel ist ebenfalls bekannt. Hierzu werden aber bevorzugt hochmolekulare Siliconöle (Viskosität ≥ 100.000 cSt) eingesetzt. Diese führen jedoch bei transparenten Formmassen zu einer Trübung und haben keinen Einfluß auf die Kerbschlagzähigkeit. Der Zusatz von Siliconöl zu PMMA-Formmassen ist aus der EP-A-352 455 bekannt.

Es wurde nun gefunden, daß der Zusatz eines relativ niedermolekularen (niederviskosen) Polysiloxans eine Erhöhung der Kerbschlagzähigkeit bei schlagzäh modifizierten PMMA/SAN-Blends um ca. 1 bis 2 Einheiten bewirkt, ohne daß eine Trübung auftritt. Bei einer Viskosität oberhalb von 500 cSt ist der Effekt der Erhöhung der Schlagzähigkeit gering und es tritt eine signifikante Eintrübung auf.

Unmittelbarer Erfindungsgegenstand ist eine transparente, schlagzähe Formmasse aus, bezogen auf die Summe aus A, B, C und D,

A: 5 bis 50 Gew.-% eines Methylmethacrylat-Polymerisats A aus, bezogen auf A

A1: 80 bis 100 Gew.-% Einheiten des Methylmethacrylats (A1),

A2: bis 20 Gew.-% Einheiten eines Alkylacrylats mit bis zu 8 C-Atomen im Alkylrest (A2),

B: 5 bis 50 Gew.-% eines Styrol-Acrylnitril-Polymerisats B aus, bezogen auf B

B1: 75 bis 85 Gew.-% Styrol und

B2: 15 bis 25 Gew.-% Acrylnitril,

C: 0,02 bis 3,0 Gew.-% eines Polysiloxans der allgemeinen Formel I,

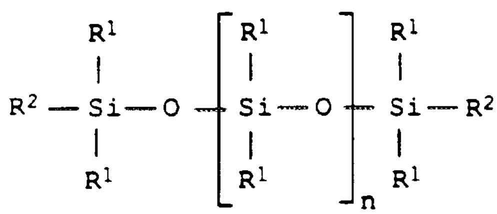

(I)

in der bedeuten

$R^1$= $C_1$-$C_6$-Alkyl oder Aryl

und

$R^2$ = Hydroxyalkyl oder Aminoalkyl mit jeweils 1 bis 6 C-Atomen

wobei

n mindestens 5 ist und das Polysiloxan bei 25°C eine Viskosität von weniger als 500 cSt aufweist und

D: 5 bis 60 Gew.-% eines vernetzten, eine Teilchengröße von 0,2 µm oder weniger aufweisenden Pfropfmischpolymerisats D aus, bezogen auf D

D1: 30 bis 80 Gew.-% einer elastomeren Pfropfgrundlage D1 aus überwiegenden Einheiten des Butadiens, Isoprens oder $C_4$-$C_8$-Alkylacrylats mit einer Glastemperatur von unter 0°C, gegebenenfalls copolymerisiert mit einer untergeordneten Menge einer vinylaromatischen Komponente (Styrol)

D2: 20 bis 70 Gew.-% einer Pfropfhülle D2 aus, bezogen auf D2

D21: 30 bis 100 Gew.-% Einheiten eines oder mehrerer (Meth)-acrylsäureester von $C_1$-$C_8$-Alkanolen und

D22: bis 70 Gew.-% Einheiten eines vinylaromatischen Monomeren

mit der Maßgabe, daß die Differenz der Brechungsindices $n_D^{25}$ des Pfropfmischpolymerisats D und der Mischung aus A, B und C weniger als 0,01 beträgt.

Zu den Bestandteilen der erfindungsgemäßen Formmasse und ihrer Herstellung ist im einzelnen das Folgende zu sagen:

Komponente A (PMMA)

Für die erfindungsgemäße Formmasse wird als Komponente A meist ein Homopolymerisat des MMA verwendet: vorzugsweise verwendet man allerdings Copolymere des MMA mit bis zu 20 Gew.-% eines $C_1$-$C_8$-Alkylacrylates, beispielsweise Methyl- oder Butylacrylat. Polymethylmethacrylate können in bekannter Art durch Masse-, Lösungs-, Emulsions- oder Perlpolymerisation hergestellt werden. Die bevorzugt eingesetzten Polymerisate sollten ein Molekulargewicht, bestimmt durch Lichtstreuung in Chloroform, im Bereich von 60.000 bis 300.000 g/mol aufweisen.

Komponente B (SAN)

Die Komponente B der erfindungsgemäßen Formmasse ist ein Copolymerisat aus 75 bis 85 Gew.-% Styrol und 15 bis 25 Gew.-% Acrylnitril; außerhalb dieses Bereiches der angegebenen Zusammensetzung erhält man bei einer Verarbeitungstemperatur über 240°C trübe Formteile, die häufig unvollständig geschlossene Bindenähte und eine verringerte Wärmeformbeständigkeit aufweisen. Geeignete Copolymerisate können durch Masse-, Lösungs-, Emulsions- oder Perlpolymerisation hergestellt werden. Bevorzugt werden in Lösung hergestellte Polymere eingesetzt. Das Gewichtsmittel des Molgewichts, bestimmt in DMF durch Lichtstreuung, beträgt 60.000 bis 300.000 g/mol. Als besonders geeignet haben sich SAN-Copolymere erwiesen, die nach dem in der GB-A-1 472 195 beschriebenen Verfahren hergestellt sind.

Komponente C

Die Komponente C ist ein Polysiloxan der vorstehend angegebenen Strukturformel (I). Dabei ist $R^1$ bevorzugt Methyl, Ethyl oder Phenyl und $R^2$ bevorzugt Hydroxypropyl oder Aminopropyl. Der Polymerisationsgrad n ergibt sich aus der erfindungsgemäßen Viskosität und liegt i.a. unter 200. Geeignete Produkte sind als Handelsprodukte erhältlich, beispielsweise unter den Bezeichnungen Silikon IM oder Silikon SLM der Wacker-Chemie GmbH.

Komponente D (Pfropfkautschuk; "Weichkomponente")

Das Pfropfpolymerisat D der erfindungsgemäßen Formmasse ist ein - eventuell vernetztes - Pfropfcopolymerisat mit einem üblichen Polydien- oder Acrylatkautschuk ($T_g < 0°C$) als Pfropfgrundlage D1, das in üblicher Weise durch Emulsionspolymerisation der "harten" Komponenten D21 und D22 in Gegenwart der Pfropfgrundlage zu einer Pfropfhülle erhalten wird und z.B. sprühgetrocknet oder durch Koagulation isoliert werden kann. Die Teilchengröße der Weichkomponente soll 0,2 µm oder weniger betragen, wobei man ein handelsübliches Produkt verwenden kann.

Die Pfropfgrundlage D1, die bis zu etwa 35 Gew.-% Styrol enthalten kann, ist in der Komponente D in einer Menge von 30 bis 80 Gew.-%, vorzugsweise 40 bis 70 Gew.-%, enthalten. Die Pfropfhülle D2 macht entsprechend 20 bis 70 Gew.-%, bevorzugt 30 bis 60 Gew.-%, aus. Bevorzugte Monomere in der Pfropfhülle sind Methylmethacrylat, dem geringe Mengen eines $C_1$-$C_4$-Acrylates, insbesondere Butylacrylat, zugesetzt werden können. Als vinylaromatische Komponente D22 ist insbesondere Styrol geeignet. Bei Verwendung von mehr als einem Monomeren in der Pfropfhülle kann ein schalenförmiger Aufbau von Vorteil sein; dies wird erzielt, indem verschiedene Monomer(mischungen) zu verschiedenen Zeiten während der Polymerisation zugegeben werden.

Die erfindungsgemäße Anpassung der Brechungsindices geschieht dadurch, daß man die Zusammensetzung (Monomerenanteile) der Komponenten A, B und C einerseits und D andererseits entsprechend wählt. Dabei geht man so vor, daß der Brechungsindex der jeweiligen Homopolymeren den benötigten Monomerenverhältnissen der Copolymeren zugrundegelegt wird. Z.B. hat der Brechungsindex eines Styrol/Butadien-Copolymerisats jeweils den Zwischenwert, der sich aus dem Gewichtsbruch der Monomerenanteile von Styrol und Butadien ergibt, wenn $n^{25}_D$ für Polystyrol zu 1.59 - 1.60 und für Polybutadien zu 1.516 angenommen wird (vgl. Brandrup-Immergut, Polymer Handbook, 2. Aufl. New York 1987).

Die Vernetzung des Pfropfmischpolymerisats D wird in üblicher Weise durch Zusatz entsprechender mehrfunktioneller Verbindungen bzw. deren Einpolymerisieren bewirkt, also z.B. 2-Divinylbenzol für Styrolpolymere oder ein Diacrylat eines zweiwertigen Alkohols für Acrylpolymere.

Die erfindungsgemäße Formmasse kann außerdem alle üblichen Zusatzstoffe enthalten, die sich in dem erfindungsgemäßen Gemisch aus A, B, C und D lösen und somit zu einer transparenten Formmasse führen (siehe auch EP-A-62 223).

Bevorzugt hat die Formmasse die folgende Zusammensetzung:

A: 10 bis 40 Gew.-%, insbesondere 15 bis 40 Gew.-%
B: 10 bis 40 Gew.-%, insbesondere 15 bis 40 Gew.-%
C: 0,05 bis 1 Gew.-%, insbesondere 0,05 bis 0,5 Gew.-%
D: 10 bis 50 Gew.-%, insbesondere 20 bis 50 Gew.-%

Zur Herstellung der erfindungsgemäßen Formmasse kommen alle üblichen Vorrichtungen zur Schmelzevermischung in Frage. Vorzugsweise verwendet man einen Doppelschneckenextruder bei einer Temperatur von 200 bis 300°C.

Für die nachstehenden Beispiele/Vergleichsversuche wurden folgende Bestandteile eingesetzt:

A: Copolymerisat aus 94 Gew.-Teilen MMA und 6 Gew.-Teilen Methylacrylat, $\overline{M}_w$ = 110.000 ($n^{25}_D$ = 1,492)

B: Copolymerisat aus Styrol und Acrylnitril im Verhältnis 81 : 19 ($n^{25}_D$ = 1,575), $\overline{M}_w$ = 250.000

C1: Di-3-aminopropylpolydimethylsiloxan mit einer Viskosität von 140 $mm^2$/sec, entsprechend einem Molekulargewicht $\overline{M}_n$ von 5200

C2: Di-3-hydroxypropylpolydimethylsiloxan mit einer Viskosität von 100 $mm^2$/sec, entsprechend einem Molekulargewicht $\overline{M}_n$ von 4000

D: Pfropfcopolymerisat von 45 Gew.-Teilen eines Gemisches aus 51 Gew.-Teilen MMA, 44 Gew.-Teilen Styrol und 5 Gew.-Teilen n-Butylacrylat auf 55 Gew.-Teilen einer elastomeren Grundstufe, bestehend aus 72 Gew.-Teilen Butadien und 28 Gew.-Teilen Styrol ($n^{25}_D$ = 1,54)

In der nachfolgenden Tabelle sind die Zusammensetzung der Mischungen sowie die Ergebnisse der optischen Beurteilung und der mechanischen Prüfung angegeben.

Tabelle

| Nr.: | Komponenten (Gew.-Tl.) | | | | | | Zähigkeit | Optik |
|---|---|---|---|---|---|---|---|---|
| | A | B | $C_1$ | $C_2$ | $C_3$ | D | $a_k$ [kJ/m²] 23°C | |
| 1 (Vergl.) | 28,5 | 35,5 | ---- | ---- | ---- | 36,0 | 3,2 | tr. |
| 2 | 28,5 | 35,5 | 0,01 | ---- | ---- | 35,99 | 3,5 | tr. |
| 3 | 28,5 | 35,5 | 0,05 | ---- | ---- | 35,95 | 4,3 | tr. |
| 4 | 28,5 | 35,5 | 0,10 | ---- | ---- | 35,90 | 4,4 | tr. |
| 5 | 28,5 | 35,5 | 0,20 | ---- | ---- | 35,80 | 4,5 | tr. |
| 6 | 28,5 | 35,5 | ---- | 0,10 | ---- | 35,90 | 4,0 | tr. |
| 7 (Vergl.) | 28,5 | 35,5 | ---- | ---- | 0,10 | 35,90 | 3,3 | op. |

tr. = transparent; op. = trübe;

**Patentansprüche**

1. Formmasse aus, bezogen auf die Summe aus A, B, C und D,

A: 5 bis 50 Gew.-% eines Methylmethacrylat-Polymerisats A aus, bezogen auf A

A1: 80 bis 100 Gew.-% Einheiten des Methylmethacrylats (A1),

A2: bis 20 Gew.-% Einheiten eines Alkylacrylats mit bis zu 8 C-Atomen im Alkylrest (A2),

B: 5 bis 50 Gew.-% eines Styrol-Acrylnitril-Polymerisats B aus, bezogen auf B

B1: 75 bis 85 Gew.-% Styrol und

B2: 15 bis 25 Gew.-% Acrylnitril,

C: 0,02 bis 3,0 Gew.-% eines Polysiloxans der allgemeinen Formel I und Zusammensetzung,

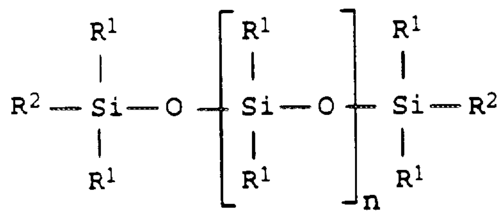

(I)

in der bedeuten

$R^1 = C_1$-$C_6$-Alkyl oder Aryl

und

$R^2$ = Hydroxyalkyl oder Aminoalkyl mit jeweils 1 bis 6 C-Atomen

wobei

n mindestens 5 ist und das Polysiloxan eine Viskosität bei 25°C von weniger als 500 $mm^2/s$ (500 cSt) aufweist und

D:5 bis 60 Gew.-% eines eine Teilchengröße von 0,2 µm oder weniger aufweisenden Pfropfmischpolymerisats D aus, bezogen auf D

D1: 30 bis 80 Gew.-% einer elastomeren Pfropfgrundlage D1 aus überwiegenden Einheiten des Butadiens, Isoprens oder auch $C_4$-$C_8$-Alkylacrylats mit einer Glastemperatur von unter 0°C,

D2: 20 bis 70 Gew.-% einer Pfropfhülle D2 aus, bezogen auf D2

D21: 30 bis 100 Gew.-% Einheiten eines oder mehrerer (Meth)-acrylsäureester von $C_1$-$C_8$-Alkanolen und

D22: bis 70 Gew.-% Einheiten eines vinylaromatischen Monomeren

mit der Maßgabe, daß die Differenz der Brechungsindices $n^{25}_D$ des Pfropfmischpolymerisats D und der Mischung aus A, B und C weniger als 0,01 beträgt.

**Claims**

1. A molding material comprising, based on the sum of A, B, C and D,

A: from 5 to 50% by weight of a methyl methacrylate polymer A of, based on A,

A1: from 80 to 100% by weight of units of methyl methacrylate (A1),

A2: up to 20% by weight of units of an alkyl acrylate having up to 8 carbon atoms in the alkyl radical (A2),

B: from 5 to 50% by weight of a styrene-acrylonitrile polymer B of, based on B,

B1: from 75 to 85% by weight of styrene and

B2: from 15 to 25% by weight of acrylonitrile,

C: from 0.02 to 3.0% by weight of a polysiloxane of the formula I

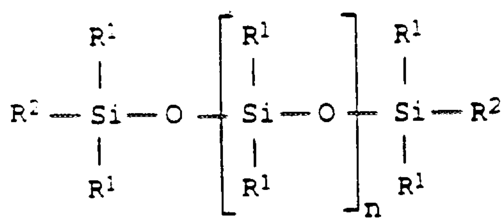

(I)

where

$R^1$ is $C_1$-$C_6$-alkyl or aryl, and
$R^2$ is hydroxyalkyl or aminoalkyl each having 1 to 6 carbon atoms,
n being at least 5 and the polysiloxane having a viscosity at 25°C of less than 500 $mm^2/s$ (500 cSt), and

D: from 5 to 60% by weight of a graft copolymer D, having a particle size of 0.2 µm or less, of, based on D,

D1: from 30 to 80% by weight of an elastomeric grafting base D1 of predominant units of butadiene, isoprene or $C_4$-$C_8$-alkyl acrylate, having a glass transition temperature of below 0°C,

D2: from 20 to 70% by weight of a graft sheath D2 of, based on D2,

D21: from 30 to 100% by weight of units of one or more (meth)acrylic acid esters of $C_1$-$C_8$-alkanols and

D22: up to 70% by weight of units of an aromatic vinyl monomer,

with the proviso that the difference in the refractive indices $n^{25}_D$ of the graft copolymer D and of the mixture of A, B and C is less than 0.01.

## Revendications

**1.** Matière à mouler constituée par, rapportés à la somme de A, B, C et D,

A: de 5 à 50% en poids d'un polymère A de méthacrylate de méthyle constitué par, rapportés à A

A1: de 80 à 100 unités de pourcentage en poids du méthacrylate de méthyle (A1)

A2: jusqu'à 20 unités de pourcentage en poids d'un acrylate d'alkyle contenant jusqu'à 8 atomes de carbone dans le radical alkyle (A2),

B: de 5 à 50% en poids d'un polymère B de styrène-acrylonitrile constitué par, rapportés à B

B1: de 75 à 85% en poids de styrène et

B2: de 15 à 25% en poids d'acrylonitrile,

C: de 0,02 à 3,0% en poids d'un polysiloxane répondant à la formule générale I et possédant la composition

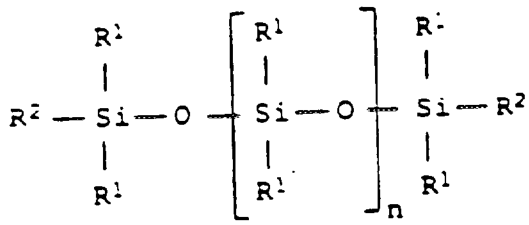

(I)

dans laquelle

$R^1$ représente un groupe alkyle en $C_1$-$C_6$ ou un groupe aryle, et

$R^2$ représente un groupe hydroxyalkyle ou un groupe aminoalkyle contenant respectivement de 1 à 6 atomes de carbone,

n représente au moins 5 et le polysiloxane présente une viscosité à 25°C inférieure à 500 $mm^2/s$ (500 cSt), et

D:de 5 à 60% en poids d'un copolymère greffé D présentant une granulométrie de 0,2 µm ou moins, constitué par, rapportés à D

D1: de 30 à 80% en poids d'un substrat de greffage élastomère D1 constitué par des unités prédominantes du butadiène, de l'isoprène ou encore de l'acrylate d'alkyle en $C_4$-$C_8$, possédant une température de transition vitreuse inférieure à 0°C,

D2: de 20 à 70% en poids d'une enveloppe de greffage D2, constituée par, rapportés à D2

D21: de 30 à 100 unités de pourcentage en poids d'un ou de plusieurs esters (méth)acryliques d'alcanols en $C_1$-$C_8$, et

D22: jusqu'à 70 unités de pourcentage en poids d'un monomère vinylaromatique

avec cette mesure que la différence de l'indice de réfraction $n^{25}_D$ du copolymère greffé D et du mélange constitué par A, B et C est inférieure à 0,01.